# EUROPEAN PATENT SPECIFICATION

(11) **EP 2 714 437 B1**
(45) Date of publication and mention of the grant of the patent: **26.10.2016**
(21) Application number: 12741100.7
(22) Date of filing: 30.05.2012
(51) Int. Cl.: B60D 1/36

(54) **A GUIDE DEVICE**
FÜHRUNGSVORRICHTUNG
DISPOSITIF DE GUIDAGE

(30) Priority: 30.05.2011 IE 20110246
(43) Date of publication of application: 09.04.2014
(73) Proprietor: O'Brien, Patrick Timothy, Sneem, County Kerry (IE); O'Sullivan, John T., Tralee, County Kerry (IE)
(72) Inventor: MCINNES, Duncan, Castleconnell County Limerick (IE); O'BRIEN, Patrick Timothy, Sneem, County Kerry (IE)
(74) Representative: Gorman, Francis Fergus
(86) International application number: PCT/IE2012/000024
(87) International publication number: WO 2012/164550

(56) References cited:
- DE-A1- 4 412 111
- US-A- 4 871 185
- US-A- 5 465 992
- US-A- 5 516 139
- US-A1- 2002 101 055
- US-A1- 2006 097 480
- US-A1- 2007 114 760
- US-A1- 2007 182 127

## Description

The present invention relates to a guide device for guiding a first hitch element, for example, a socket hitch of a pair of interengageable complementary hitch elements mounted on one of a prime mover and a trailable element into substantial vertical alignment with a second hitch element, for example, a ball hitch of the pair of hitch elements mounted on the other one of the prime mover and the trailable element. The invention also relates to a towing vehicle and/or a trailable element comprising the guide device.

Hitching a trailer to a prime mover, for example, to a towing vehicle, such as a truck, a four-by-four vehicle and the like is a difficult task when the trailer is a large heavy trailer which does not lend itself to being manually manoeuvrable. In general, in such cases it is necessary to reverse the towing vehicle to the trailer, and attempt to align the hitch element on the towing vehicle with the complementary hitch element on the trailer while the towing vehicle is being reversed. This is a particularly difficult task, since neither the hitch element on the towing vehicle nor the hitch element on the trailer are visible to the driver of the towing vehicle.

Guide devices for guiding one of a pair of hitch elements on a trailer into vertical alignment with the other of the pair of hitch elements located on a towing vehicle are known. Such a guide device is disclosed in US 2007/0182127 A1, showing the preamble of claim 1 and in U.S. Patent Specification No. 6,969,085 of Causey. The guide device of Causey comprises a pair of rearwardly diverging guide plates which are rigidly mounted on the towing vehicle adjacent the rear of the towing vehicle between the towing vehicle and the hitch element, which in the case of Causey is a ball hitch. The diverging guide plates are located relative to the ball hitch, so that the ball hitch is located within the guide plates with the guide plates extending on respective opposite sides of the ball hitch. As the towing vehicle is being reversed, if the socket hitch is misaligned with the locus of travel of the ball hitch, the socket hitch is engaged by one of the guide plates which urges the socket hitch towards the ball hitch and eventually into vertical alignment with the ball hitch. However, the guide element of Causey, and other similar types of guide elements suffer from a number of disadvantages, one of which is that if the socket hitch is significantly out of alignment with the locus of travel of the ball hitch as the towing vehicle is being reversed, it is difficult and in many cases impossible to correct the misalignment of the socket hitch with the ball hitch, to the extent that it is not possible to satisfactorily vertically align the socket hitch with the ball hitch. There is therefore a need for a guide device which addresses this problem.

The present invention is directed towards providing such a guide device. The invention is also directed towards providing a towing vehicle and/or a trailable vehicle comprising the guide device.

According to the invention there is provided a guide device for guiding a first hitch element of a pair of interengageable complementary hitch elements mounted on one of a prime mover and a trailable element into substantial vertical alignment with a second hitch element of the pair of hitch elements mounted on the other one of the prime mover and the trailable element, the guide device comprising a mounting means for mounting on one of the prime mover and the trailable element between the second hitch element and the one of the prime mover and the trailable element, and a guide element comprising a pair of diverging guide members defining a hitch accommodating area, the guide element being pivotally coupleable to the mounting means about a pivot axis with the second hitch element located in or vertically aligned with the hitch accommodating area, and the guide element being pivotal about the pivot axis relative to the mounting means and relative to the second hitch element, the guide members being adapted to engage and guide the first hitch element into substantial vertical alignment with the second hitch element as the one of the prime mover and the trailable element is urged towards the other one of the prime mover and the trailable element, wherein a limit means is provided for limiting the angle through which the guide element is pivotal about the pivot axis to a predefined pivot angle, and the limit means is configured to limit pivoting of the guide element about the pivot axis from a central position relative to a datum line extending between the pivot axis and a vertical axis defined by the second hitch element an equal amount on respective opposite sides of the datum line into respective offset positions.

Preferably, the pivot axis about which the guide element is pivotally coupleable to the mounting means extends substantially vertically.

In one aspect of the invention the guide members of the guide element define an apex. Preferably, the guide members of the guide element extend and diverge from the apex. Advantageously, the pivot axis about which the guide element is pivotally coupleable to the mounting means lies adjacent the apex defined by the guide members.

In another aspect of the invention the guide members diverge from each other from the apex adjacent the hitch accommodating area at a first angle, and the guide members diverge from each other from respective locations intermediate the hitch accommodating area and respective distal ends of the guide members at a second angle, the second angle being of value different to the value of the first angle. Preferably, the second angle at which the guide members diverge from each other is greater than the first angle at which the guide members diverge from each other.

In one embodiment of the invention the first angle lies in the range of 45° to 90°. Preferably, the first angle lies in the range of 60° to 75°. Advantageously, the first angle is approximately 65°.

In another embodiment of the invention the second angle lies in the range of 60° to 110°. Preferably, the second angle lies in the range of 80° to 100°. Advantageously, the second angle is approximately 95°.

In one embodiment of the invention the predefined pivot angle through which pivoting of the guide element about the pivot axis is limited by the limited means does not exceed 30°. Preferably, the predefined pivot angle through which pivoting of the guide element about the pivot axis is limited by the limit means does not exceed 20°. Advantageously, the predefined pivot angle through which pivoting of the guide element about the pivot axis is limited by the limit means does not exceed 15°. Ideally, the predefined pivot angle through which pivoting of the guide element about the pivot axis is limited by the limit means is approximately 11.4°.

In another aspect of the invention the guide element defines a centre line extending from the apex defined by the guide members and bisecting the hitch accommodating area, the centre line coinciding with the datum line when the guide element is in the central position.

In a further aspect of the invention the datum line extends parallel to a centre line of the one of the prime mover and the trailable element on which the mounting means is mountable. Preferably, the datum line coincides with a centre line of the one of the prime mover and the trailable element on which the mounting means is mountable.

In one embodiment of the invention the limit means comprises a pair of limit elements for engaging the respective guide members externally of the hitch accommodating area. Preferably, the limit elements are mounted on the mounting means. Advantageously, the limit elements are spaced apart from each other on respective opposite sides of the pivot axis about which the guide element is pivotally coupleable to the mounting means.

In another embodiment of the invention each guide member comprises a guide plate. Preferably, each guide plate lies in a corresponding substantially vertical plane. Advantageously, the guide plates diverge from each other to define the apex in the form of an elongated ridge.

In one aspect of the invention the pivot axis about which the guide element is pivotally coupleable to the mounting means extends substantially parallel to the ridge defined by the apex formed by the guide plates.

In another embodiment of the invention the mounting means comprises a mounting bracket.

In a further embodiment of the invention the mounting bracket is adapted to be secured to a tow bar on which the second hitch element is mounted. Preferably, the mounting bracket is adapted to be clamped onto the tow bar.

Alternatively, the mounting bracket is adapted to be secured between a carrier element for carrying the second hitch element, and the second hitch element. Preferably, the mounting bracket is adapted to be secured between the carrier element and the second hitch element by fasteners. Advantageously, the fasteners comprise screws.

In one embodiment of the invention a pivot pin extends from the guide element, the pivot pin defining the pivot axis about which the guide element is pivotal relative to the mounting means, and the pivot pin is pivotally engageable in a pivot bore extending into the mounting means.

Preferably, the guide element is releasably pivotally coupleable with the mounting means.

In one embodiment of the invention the hitch accommodating area is adapted for accommodating the second hitch element comprising one of a ball hitch element and a pin hitch element.

In another embodiment of the invention the guide element is adapted for guiding the first hitch element comprising one of a socket hitch element and an eye hitch element into vertical alignment with the second hitch element.

Preferably, the second hitch element is located in the hitch accommodating area.

In another embodiment of the invention the second hitch element comprises at least one of a ball hitch and a pin hitch.

In another embodiment of the invention the second hitch element comprises a pin hitch and a ball hitch.

The invention also provides a prime mover comprising the guide device according to the invention.

The invention also provides a trailable element comprising the guide device according to the invention.

Further the invention provides a trailer comprising the guide device according to the invention.

Additionally the invention provides trailable mobile equipment comprising the guide element according to the invention.

The advantages of the invention are many. By virtue of the fact that the guide element is pivotally coupleable to the mounting means, and in turn is pivotal relative to the second hitch element, which is mounted on the towing vehicle, in the event of the first hitch element, which is mounted on the trailable element, being out of alignment with the locus of travel of the second hitch element as the towing vehicle is being reversed for vertically aligning the first hitch element with the second hitch element, the guide element on being engaged by the misaligned first hitch element pivots into an appropriate offset position which enhances the ability of the guide element to accurately guide the first hitch element into vertical alignment with the second hitch element as the towing vehicle is being reversed.

Additionally, by providing the guide members of the guide element to diverge from each other at first and second angles whereby the second angle is greater than the first angle, the guide element is capable of guiding a first hitch element which is located on the trailable element, and which is significantly misaligned with the locus of travel of the second hitch element as the towing vehicle is being reversed, into vertical alignment with the second hitch element. By providing the guide members to diverge at the second angle which is greater than the first angle between respective locations of the guide members intermediate the hitch accommodating area and the distal ends of the guide members, the portion of one of the guide members which diverges from the other one of the guide members at the second guide angle initially engages the first hitch element which is misaligned with the locus of travel of the second hitch. Further reversing of the towing vehicle commences initial correction of the alignment of the first hitch element with the locus of travel of the second hitch element, and the portion of the adjacent guide member which diverges from the other guide member at the first hitch angle then makes a final finer correction of the misalignment of the first hitch element with the locus of travel of the second hitch element until the first hitch element is in vertical alignment with the second hitch element.

Further advantages of the invention are that it eliminates the need for human intervention to lift or urge a trailer or other such trailable element or equipment for in turn urging the first hitch element on the trailer or other trailable element into vertical alignment with the second hitch element of the towing vehicle, thereby avoiding any danger of injury to a person having to lift the trailer or trailable elements. The guide element according to the invention also avoids any danger of the first hitch element which is mounted on the trailer or other trailable element engaging and damaging tail lights, a rear bumper or other portions of the rear of a towing vehicle as the towing vehicle is being urged rearwardly for vertically aligning the first hitch element with the second hitch element. Needless to say, the provision of the guide device saves considerable time and manpower in hitching a trailer or other trailable element to a towing vehicle.

The invention will be more clearly understood from the following description of some preferred embodiments thereof, which are given by way of example only, with reference to the accompanying drawings, in which:
Fig. 1 is a perspective view of a guide device according to the invention for guiding one of a pair of interengageable complementary hitch elements of the type which would be mounted on a trailer into substantial vertical alignment with the other one of the pair of hitch elements of the type which would be mounted on a prime mover,
Fig. 2 is a top perspective view of the guide device of Fig. 1,
Fig. 3 is an exploded perspective view of the guide device of Fig. 1,
Fig. 4 is a perspective view of a portion of the guide device of Fig. 1,
Fig. 5 is a perspective view of another portion of the guide device of Fig. 1,
Fig. 6 is a perspective view of one of the hitch elements onto which the guide device of Fig. 1 is suitable for mounting,
Fig 7 is a top plan view of the guide device of Fig. 1 illustrating a portion of the guide device in a central position,
Fig. 8 is a top plan view of the guide device of Fig. 1 illustrating the guide device in one offset position,
Fig. 9 is a top plan view of the guide device of Fig. 1 illustrating the guide device of Fig. 1 in another offset position,
Fig. 10 is a top plan view of a prime mover also according to the invention comprising the guide device of Figs. 1 to 9, and a trailer hitched to the prime mover,
Fig. 11 is a side elevational view of the prime mover and the trailer of Fig. 10,
Fig. 12 is a side elevational view of a guide device according to another embodiment of the invention illustrated on a rear portion of a prime mover,
Fig 13 is an exploded plan view of the guide device of Fig. 12,
Fig. 14 is a perspective view of a portion of a guide device of Fig. 12,
Fig. 15 is a perspective view of one of a pair of interengageable complementary hitch elements for which the guide device of Fig. 12 is suitable,
Fig. 16 is a side elevational view of a guide device according to another embodiment of the invention illustrated mounted on a rear portion of a prime mover for guiding one of a pair of interengageable complimentary hitch elements mounted on a trailer into substantial vertical alignment with the other one of the pair of hitch elements of the type mounted on the prime mover,
Fig. 17 is a perspective view of a portion of the guide device of Fig. 16, and
Fig. 18 is a partly cross-sectional side elevational view of the guide device of Fig. 16.

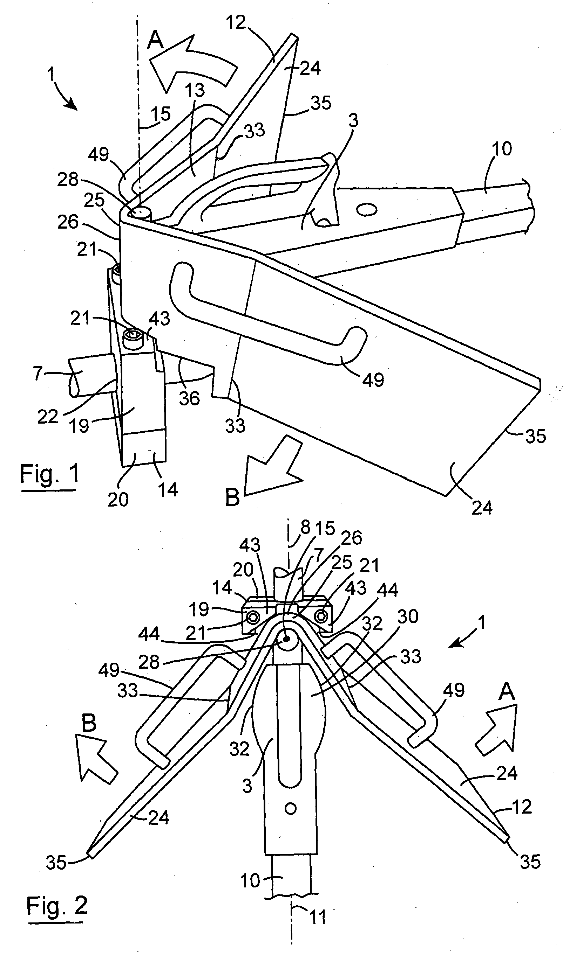

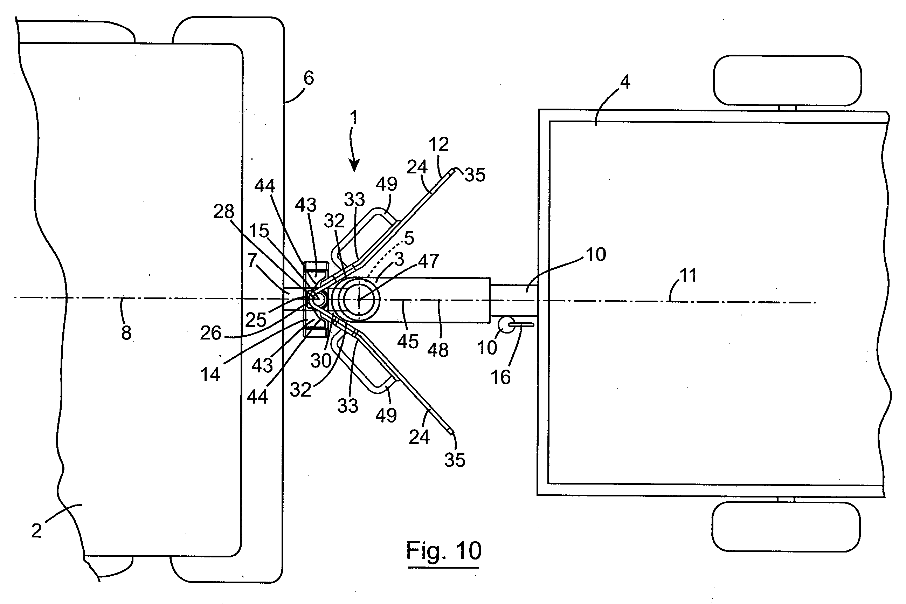

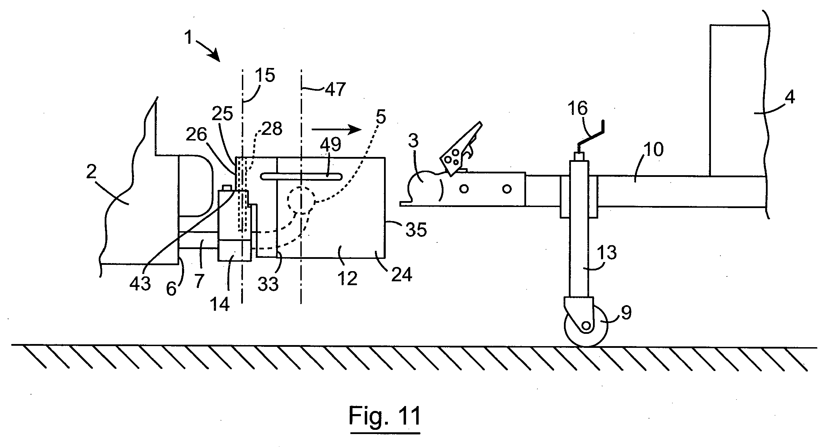

Referring to the drawings and initially to Figs. 1 to 11, there is illustrated a guide device according to the invention, indicated generally by the reference numeral 1, mounted on a prime mover also according to the invention, namely, a four-by-four towing vehicle 2 for guiding a first hitch element of a pair of interengageable complementary hitch elements, namely, a socket hitch 3 mounted on a trailable element, namely, a trailer 4 into substantial vertical alignment with a second hitch element of the pair of hitch elements, namely, a ball hitch 5 mounted on the towing vehicle 2. Such hitches comprising a ball hitch and socket hitch will be well known to those skilled in the art, and further description should not be necessary. The guide device 1 is particularly suitable for vertically aligning a socket hitch 3 of the type which would be mounted on a relatively heavy trailable element, such as a heavy trailer or heavy mobile equipment, such as a mobile compressor or the like where the trailer, or mobile compressor or other such trailable element could not be easily manoeuvred manually.

A tow bar 7 extending rearwardly from a rear end 6 of the towing vehicle 2 along a centre line 8 of the towing vehicle 2 terminates in the ball hitch 5. A hitch carrying shaft 10 extending forwardly from the trailer 4 along a centre line 11 of the trailer 4 terminates in the socket hitch 3. A forward ground engaging wheel 9 rotatably carried on a height adjustable support member 13, which extends downwardly from the hitch carrying shaft 10, supports the forward end of the trailer 4 with the hitch socket 3 spaced apart above the ground. The height adjustable support member 13 is rotatable in a threaded bore (not shown) by a handle 16 for adjusting the height of the hitch carrying shaft 10 above the ground, and in turn the height of the socket hitch 3 above the ground. Such height adjustable support members of trailers as the height adjustable support member 13 will be well known to those skilled in the art.

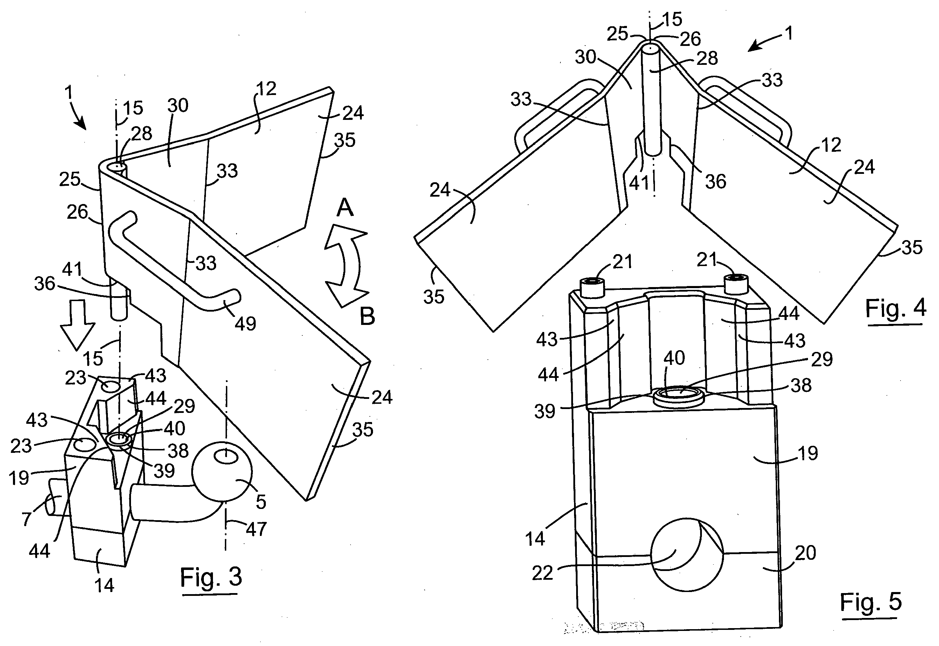

The guide device 1 comprises a guide element 12 of steel for engaging and guiding the socket hitch 3 into vertical alignment with the ball hitch 5 as the towing vehicle 2 is being reversed towards the trailer 4. The guide element 12 is releasably and pivotally coupleable to a mounting means, namely, a mounting bracket 14 about a substantially vertically extending pivot axis 15 in the directions of the arrows A and B relative to the mounting bracket 14 and to the ball hitch 5, as will be described below. The mounting bracket 14 is clamped onto the tow bar 7 and is located on the tow bar 7 between the ball hitch 5 and the rear end 6 of the towing vehicle 2. The mounting bracket 14 comprises an upper block 19 and a lower block 20 both of steel which are secured together by a pair of screws 21, see Fig. 5. A mounting bore 22, one half of which is formed in the upper block 19 and the other half of which is formed in the lower block 20 accommodates the tow bar 7 therethrough. The diameter of the mounting bore 22 is just less than the diameter of the tow bar 7, so that the mounting bracket 14 is tightly clamped onto the tow bar 7 when the upper and lower blocks 19 and 20 of the mounting bracket 14 are tightly secured together by the screws 21. A pair of plain bores 23 in the upper block 19 accommodate the screws 21 to corresponding threaded bores (not shown) in the lower block 20 with which the screws 21 are engageable for clamping the mounting bracket 14 onto the tow bar 7.

The guide element 12 comprises a pair of guide members, which in this embodiment of the invention are provided by guide plates 24 of steel which diverge from an apex 25 formed by a ridge 26 defined by the guide plates 24 adjacent the apex 25. A pivot pin 28 of steel secured to the guide plates 24 adjacent the apex 25 by welding extends downwardly from the guide plates 24, and is releasably engageable with a corresponding pivot bore 29 in the upper block 19 of the mounting bracket 14. The pivot bore 29 and the pivot pin 28 define the pivot axis 15 about which the guide element 12 is pivotal relative to the mounting bracket 14 and relative to the ball hitch 5.

The guide plates 24 when the guide element 12 is coupled to the mounting bracket 14 diverge rearwardly relative to the towing vehicle 2 and define a hitch accommodating area 30 for accommodating the ball hitch 5 between the guide plates 24. The hitch accommodating area 30 is defined towards the apex 25 of the guide plates 24 but is spaced apart sufficiently from the apex 25, so that when the mounting bracket 14 is correctly mounted on the tow bar 7 and the pivot pin 28 of the guide element 12 is pivotally engaged in the pivot bore 29 of the mounting bracket 14, the ball hitch 5 is located in the hitch accommodating area 30 in a position, so that when the socket hitch 3 is substantially in vertical alignment with and above the ball hitch 5, side edges 32 of the socket hitch 3 are almost in engagement with but slightly spaced apart from the guide plates 24, see Figs. 2, 7 and 10.

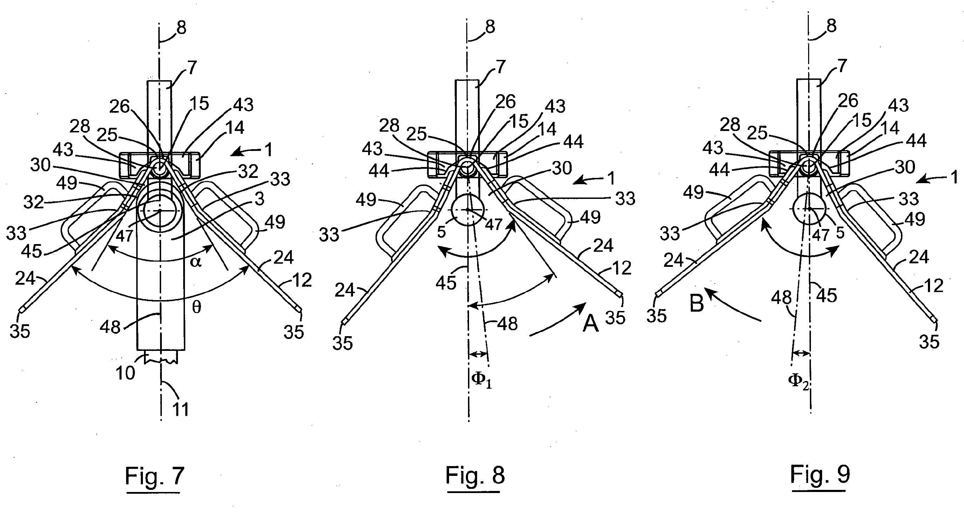

The guide plates 24 diverge from the apex 25 adjacent the hitch accommodating area 30 at a first angle α of approximately 62°, see Fig. 7. The guide plates 24 further diverge at a second angle θ from a location 33 intermediate the hitch accommodating area 30 and distal ends 35 of the respective guide plates 24. In this embodiment of the invention the second angle θ is greater than the first angle α and is approximately 94°.

A portion 36 of the guide plates 24 is shaped adjacent the apex 25 to accommodate the upper block 19 of the mounting bracket 14 during pivoting of the guide element 12. A flanged bearing 38 is located in the pivot bore 29 of the mounting bracket 14 to pivotally engage the pivot pin 28 of the guide element 12. A flange 39 of the flanged bearing 38 defines an upwardly facing bearing surface 40 for engaging lower edges 41 of the respective guide plates 24 to accommodate pivoting of the guide element 12 around the pivot axis 15.

Limit means for limiting pivotal movement of the guide element 12 about the pivot axis 15 in the directions of the arrows A and B comprises a pair of limit elements 43 formed integrally with and extending upwardly from the upper block 19 of the mounting bracket 14. The limit elements 43 define abutment faces 44 which are engageable with the respective guide plates 24 for limiting pivotal movement of the guide element 12 about the pivot axis 15 in the directions of the arrows A and B. In this embodiment of the invention the limit elements 43 co-operate with the guide plates 24 to permit pivoting of the guide element 12 about the pivot axis 15 in the directions of the arrows A and B through a total predefined pivot angle of approximately 11.4°.

The pivot bore 29 is located relative to the mounting bore 22 in the mounting bracket 14 so that when the mounting bracket 14 is mounted on the tow bar 7, a datum line 45 extending between the pivot axis 15 defined by the pivot pin 28 and the pivot bore 29 and a vertical axis 47 defined by the ball hitch 5 coincides with the centre line 8 of the towing vehicle 2. The guide element 12 defines a centre line 48 extending through the apex 25 thereof and bisecting the hitch accommodating area 30, which when the guide element 12 is in a central position illustrated in Fig. 7 relative to the mounting bracket 14 and the ball hitch 5, the centre line 48 of the guide element 12 coincides with the datum line 45, and in turn with the centre line 8 of the towing vehicle 2.

The limit elements 43 co-operate with the guide plates 24 to permit the guide element 12 to pivot from the central position in the directions of the arrows A and B to respective offset positions illustrated in Figs. 8 and 9 with the centre line of the guide element 12 extending at angles ϕ₁ and ϕ₂, respectively, to the datum line 45 and in turn to the centre line 8 of the towing vehicle 2. In this embodiment of the invention the angles ϕ₁ and ϕ₂ through which the guide element 12 is pivotal from the central position to the offset positions on the respective opposite sides of the datum line 45 are equal, and each angle ϕ₁ and ϕ₂ is approximately 5.7°, namely, half the value of the total predefined pivot angle of 11.4° through which the guide element 12 is pivotal.

Handles 49 of steel welded to the respective guide plates 24 facilitate placement and removal of the guide element 12 in the mounting bracket 14.

In use, the mounting bracket 14 is clamped onto the tow bar 7 by securing the upper and lower blocks 19 and 20 together with the screws 21. Prior to clamping the mounting bracket 14 onto the tow bar 7, the position of the mounting bracket 14 on the tow bar 7 is adjusted to accurately locate the ball hitch 5 in the hitch accommodating area 30 of the guide element 12, so that when the guide element 12 is in the central position and the socket hitch 3 of the trailer 4 is vertically aligned with the ball hitch 5, the side edges 32 of the socket hitch 3 are just about touching but slightly spaced apart from the guide plates 24 of the guide element 12. Once the mounting bracket 14 is accurately located on the tow bar 7, the screws 21 are tightened to clamp the mounting bracket 14 onto the tow bar 7.

Thereafter, when it is desired to hitch the socket hitch 3 of the trailer 4 or any other socket hitch of any other trailable vehicle onto the ball hitch 5 of the towing vehicle 2, the guide element 12 is mounted on the mounting bracket 14 by engaging the pivot pin 28 of the guide element 12 in the flanged bearing 38 of the pivot bore 29 of the mounting bracket 14. The height adjustable support member 13 of the trailer 4 is adjusted to raise the level of the socket hitch 3 to a level above the ground which is higher than the level of the ball hitch 5 above the ground. The towing vehicle 2 is then reversed towards the trailer 4.

If the socket hitch 3 is aligned with the locus of travel of the ball hitch 5 as the towing vehicle 2 is being reversed, further reversing of the towing vehicle 2 results in the socket hitch 3 being vertically aligned above the ball hitch 5. On the socket hitch 3 being vertically aligned above the ball hitch 5, the socket hitch 3 is then lowered onto the ball hitch 5 by operating the height adjustable support member 13 for lowering the front end, and in turn the socket hinge 3 of the trailer 4 until the socket hitch 3 engages the ball hitch 5.

On the other hand, if the socket hitch 3 is not aligned with the locus of travel of the ball hitch 5 as the towing vehicle 2 is being reversed, as the ball hitch 5 of the towing vehicle 2 begins to approach the socket hitch 3 of the trailer 4, the socket hitch 3 engages an adjacent one of the guide plates 24 of the guide element 12 resulting in the guide element 12 pivoting about the pivot axis 15 from the central position to the appropriate one of the offset positions. Thus, further movement of the towing vehicle 2 and in turn the guide element 12 towards the socket hitch 3 results in the adjacent one of the side plates 24 urging the socket hitch 3 into alignment with the locus of travel of the ball hitch 5 until the socket hitch 3 is located in the hitch accommodating area 30 substantially vertically aligned with and above the ball hitch 5. When the socket hitch 3 is vertically aligned above the ball hitch 5, the socket hitch 3 is lowered onto the ball hitch 5 by operating the height adjustable support member 13 of the trailer 4. Thereafter the guide element 12 is disengaged from the mounting bracket 14 and removed until it is next required.

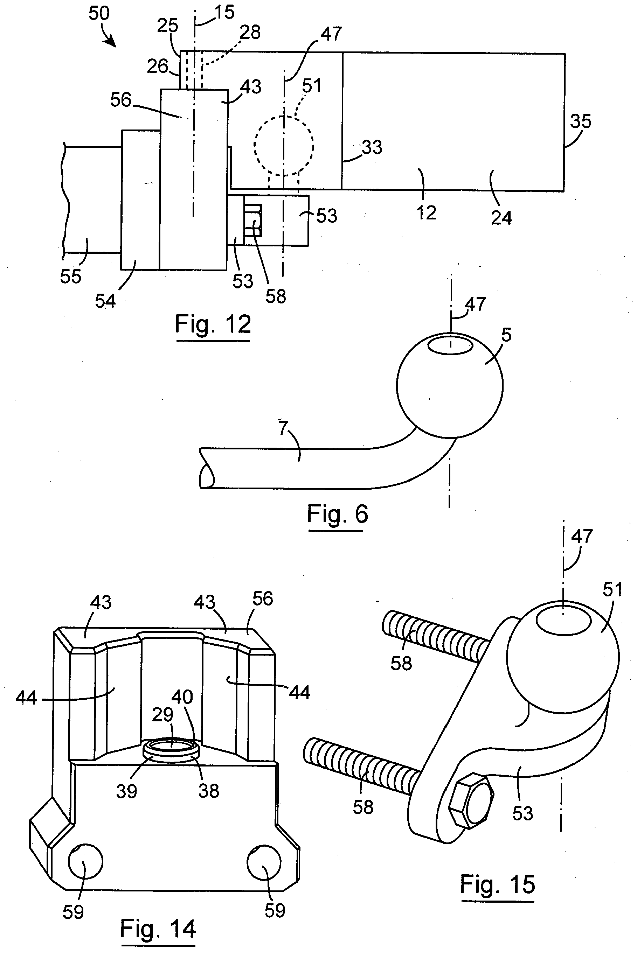

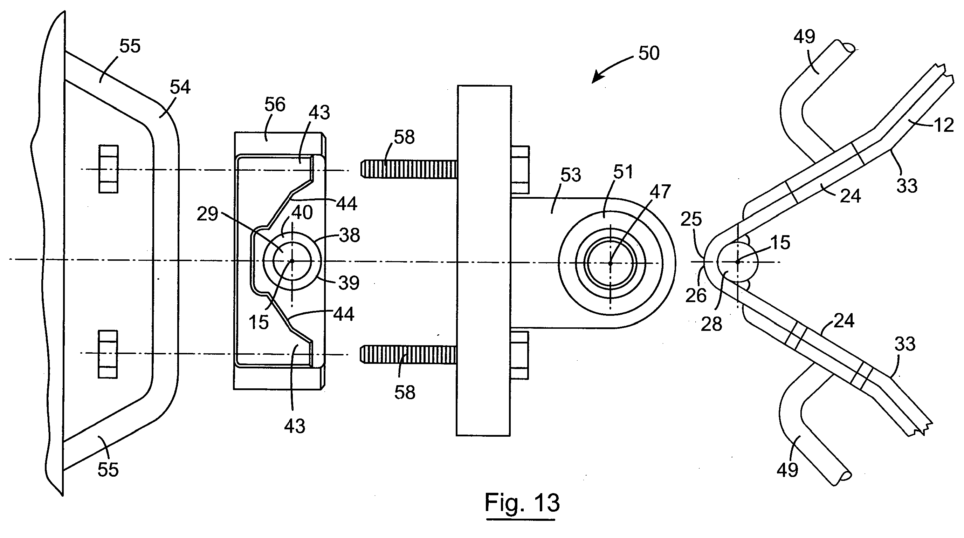

Referring now to Figs. 12 to 15, there is illustrated a guide device according to another embodiment of the invention, indicated generally by the reference numeral 50, for guiding a socket hitch of a trailer, neither of which are illustrated, but which are similar to the socket hitch 3 and the trailer 4 described with reference to Figs. 1 to 11, into substantial vertical alignment with a ball hitch 51 mounted on a towing vehicle (not shown), but which could be similar or different to the towing vehicle 2 described with reference to Figs. 1 to 11. The guide device 50 is substantially similar to the guide device 1 and similar components are identified by the same reference numerals. In this embodiment of the invention the ball hitch 51 is of the type which is located on a mounting block 53, which in turn is normally secured to a carrier element, namely, a carrier plate 54 of the towing vehicle. The carrier plate 54 is carried on a sub-framework 55 which in turn is secured to the chassis (not shown) of the towing vehicle, and extends rearwardly from a near end of the towing vehicle. Such ball hitches as the ball hitch 51 and carrier plates as the carrier plate 54 which are mounted on a sub-framework of a towing vehicle will be well known to those skilled in the art, as will the sub-framework.

In this embodiment of the invention the guide device 50 comprises a mounting means, namely, a mounting bracket 56 which is adapted for mounting between the mounting block 53 of the ball hitch 51 and the carrier plate 54. Fastening elements, namely, screws 58 extend through bores (not shown) in the mounting block 53 and in turn through bores 59 in the mounting bracket 56 and engage threaded bores (not shown) in the carrier plate 54 for securing the mounting bracket 56 between the ball hitch 5 and the carrier plate 54. The mounting bracket 56 in this embodiment of the invention is machined from a single block of steel. Otherwise, the mounting bracket 56 is similar to the mounting bracket 14 of the guide device 1.

The guide element 12 is similar to the guide element 12 of the guide device 1. The pivot pin 28 of the guide element 12 is releasably pivotally engageable in the flanged bearing 38, and is pivotal from a central position to the respective offset positions on either side of the datum line 45 through respective angles, similar to the angles ϕ₁ and ϕ₂ through which the guide element 12 is pivotal in the mounting bracket 14 of the guide device 1.

Otherwise, the guide device 50 and its use is similar to the guide device 1 and its use.

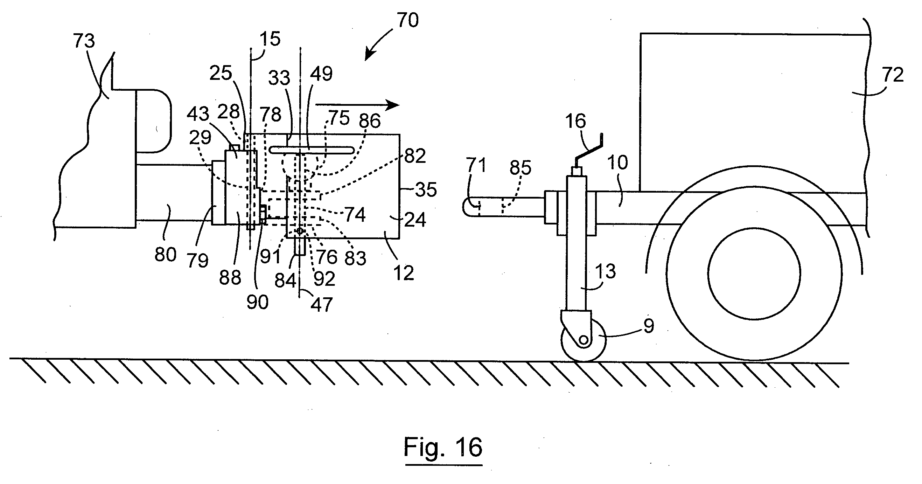

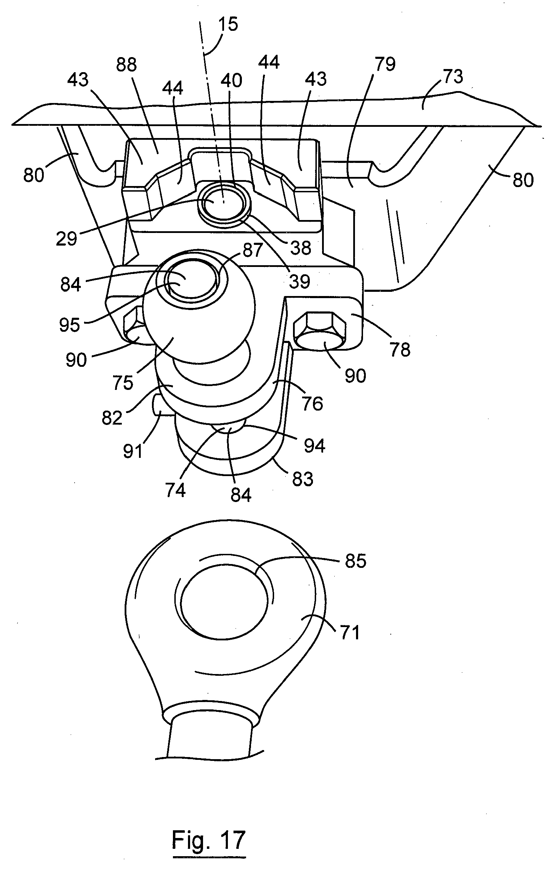

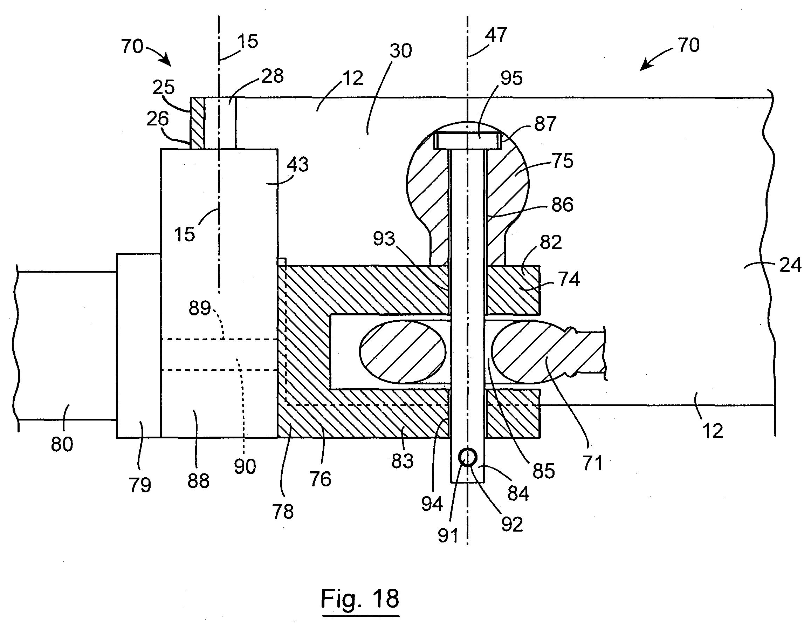

Referring now to Figs. 16 to 18, there is illustrated a guide device according to a further embodiment of the invention, indicated generally by the reference numeral 70, for guiding either a socket hitch (not shown) or an eye hitch 71 of a trailer 72 into substantially vertical alignment with a hitch element, namely, a tow hitch 76 mounted on a towing vehicle 73. The tow hitch 76 in this embodiment of the invention comprises both a pin hitch 74 and a ball hitch 75 which is carried on and above the pin hitch 74. The guide device 70 is substantially similar to the guide device 1 and similar components are identified by the same reference numerals. Before describing the guide device 70, the tow hitch 76 will first be described.

The tow hitch 76 comprises a mounting block 78 which normally on a towing vehicle is mounted directly onto a carrier plate 79 which is substantially similar to the carrier plate 54 described with reference to the guide device 50. The carrier plate 79 is carried on a sub-framework 80, which is also substantially similar to the sub-framework 55 described with reference to the guide device 50. The sub-framework 80 is secured to the chassis (not shown) of the towing vehicle 73 and extends rearwardly from the rear end of the towing vehicle 73. A pair of spaced apart upper and lower support plates 82 and 83 extend rearwardly from the mounting block 78 of the tow hitch 76 for accommodating the eye hitch 71 therebetween. A pair of aligned bores 93 and 94 extending through the upper and lower support plates 82 and 83 accommodate a hitch pin 84 therethrough for engaging an eye 85 of the eye hitch 71.

The ball hitch 75 is mounted on the upper support plate 82 for engaging a corresponding socket hitch (not shown). A bore 86 extends through the ball hitch 75 to accommodate the hitch pin 84 therethrough and in turn through the bores 93 and 94 in the upper and lower support plates 82 and 83. The hitch pin 84 is provided with a head 95 which is engaged in a counter-bore 87 of the bore 86 extending through the ball hitch 75. Such tow hitches as the tow hitch 76 will be well known to those skilled in the art.

In this embodiment of the invention the mounting means of the guide device 70 comprises a mounting bracket 88 which is substantially similar to the mounting bracket 56 of the guide device 50 and is machined from a block of steel. The mounting bracket 88 is mounted between the tow hitch 76 and the carrier plate 79. A pair of screw accommodating bores 89 extending through the mounting bracket 88 accommodate screws 90 for securing the mounting bracket 88 between the mounting block 78 of the two hitch 76 and the carrier plate 79. Otherwise, the mounting bracket 88 is similar to the mounting bracket 14 of the guide device 1.

The guide element 12 of the guide device 70 is similar to the guide element 12 of the guide device 1. The pivot pin 28 of the guide element 12 is pivotally engageable in the flanged bearing 38 of the mounting bracket 88 in similar manner as the guide element 12 of the guide device 1 is pivotally engageable in the flanged bearing 38 in the pivot bore 29 of the mounting bracket 14 of the guide device 1.

Otherwise, the guide device 70 and its use is similar to the guide device 1 and its use.

When the trailer 72, which comprises the eye hitch 71, is to be towed by the towing vehicle 73, the height of the eye hitch 71 above the ground is adjusted by the adjustable support member 13 so that the level of the eye hitch 71 is approximately similar to the level of the pin hitch 74 of the towing vehicle 73 above the ground. With the hitch pin 84 removed from the tow hitch 76 and the guide element 12 pivotally mounted in the mounting bracket 88, the towing vehicle 73 is reversed for urging the tow hitch 76 towards the eye hitch 71. If the eye hitch 71 is aligned with the locus of travel of the tow hitch 76, the eye hitch 71 should engage directly between the upper and lower support plates 82 and 83, and the towing vehicle is then urged further rearwardly until the eye 85 of the eye hitch 71 is aligned with the bores 93 and 94 through the upper and lower support plates 82 and 83. With the eye hitch 71 aligned with the bores 93 and 94 of the upper and lower support plates 82 and 83, the hitch pin 84 is passed through the bore 86 in the ball hitch 75 and is urged downwardly therethrough to engage the eye 85 of the eye hitch 71 through the bores 93 and 94 of the upper and lower support plates 82 and 83. Thereafter the hitch pin 84 is secured in the bore 86 and the bores 93 and 94 extending through the upper and lower support plates 82 and 83 by a cotter pin 91 extending through a transverse bore 92 which extends transversely through the hitch pin 84 beneath the lower support plate 83.

On the other hand, if the eye hitch 71 is not aligned with the locus of travel of the tow hitch 76 as the towing vehicle 73 is being reversed and is approaching the tow hitch 76, the eye hitch 71 engages an adjacent one of the guide plates 24 of the guide element 12. As the eye hitch 71 engages the adjacent guide plate 74 of the guide element 12, the guide element 12 is urged from the central position into the corresponding offset position. Further reversing of the towing vehicle 73 urges the eye hitch 71 along the guide plate 24 of the guide element 12 against which the eye hitch 71 is abutting so that the eye hitch 71 is guided by the adjacent guide plate 74 into vertical alignment with the tow hitch 76 between the upper and lower support plates 82 and 83 as the towing vehicle 73 is being further reversed.

If the trailer to be hitched to the towing vehicle 73 comprises a socket hitch, the socket hitch is vertically aligned with the ball hitch 75 of the tow hitch 76 in a similar manner to that described with reference to the guide device 1 of Figs. 1 to 11.

Otherwise, the guide device 70 and its use is similar to the guide device 1 and its use.

The advantages of the invention are many. The guide devices according to the invention are particularly suitable for aligning a socket hitch or an eye hitch of a towable vehicle with a ball hitch or a pin hitch of a towing vehicle where the towable vehicle is of the type which is not easily manually manoeuvrable into engagement with a ball or pin hitch of a towing vehicle. By providing the guide element to be pivotal in the mounting bracket, and in turn pivotal relative to the ball or pin hitch, any slight misalignment of the socket or eye hitch with the ball or pin hitch as the towing vehicle is being reversed towards the socket or eye hitch is readily corrected by the guide element pivoting into or towards the appropriate one of the offset positions. This is due to the fact that the pivoting of the guide element into the appropriate one of the offset states or towards the offset state on the adjacent one of the guide plates being engaged by the socket or eye hitch, the guide element guides the socket or eye hitch towards the ball or pin hitch at a broader angle than would otherwise be possible if the guide element were fixed relative to the ball or pin hitch. This ensures that as the socket or eye hitch is being further urged along the guide plate, its locus of travel begins to approach the locus of travel of the ball or pin hitch, thereby ultimately bringing the socket or eye hitch into vertical alignment with the ball or pin hitch.

While the guide device has been described as being mounted on the towing vehicle, it is envisaged in certain cases that the guide device instead of being mounted on the towing vehicle could be mounted on the trailable vehicle. It will also be appreciated that while the guide device has been described for use with a ball and socket hitch and a pin hitch, the guide device may be used for any other type of tow hitch. Further, it will be appreciated that while the guide devices according to the invention have been described for mounting on the towing vehicle, the guide devices may be provided for mounting on the towing vehicle or the trailable element, and may be adapted to be located on the relevant one of the towing vehicle and the trailable element with a socket hitch or an eye hitch located in the hitch accommodating area, rather than a ball hitch or a pin hitch located in the hitch accommodating area defined by the guide element, in which case, the guide element would guide the ball hitch or the pin hitch, or both, as the case may be, into engagement with the socket or eye hitch located in the hitch accommodating area defined by the guide element.

It will also be appreciated that other suitable mounting means besides the mounting means described may be provided for mounting the guide element onto the relevant tow bar or carrier plate of the relevant hitch element of the towing or trailable vehicle. Needless to say, while the guide element has been described as comprising a pair of guide plates, other suitable guide members besides guide plates may be provided, and while the guide plates have been described as diverging at first and second angles relative to each other, it is envisaged in certain cases that the guide plates may diverge at one angle only from each other.

While it is desirable, it is not essential that the guide plates should diverge from an apex. However, the spacing between the guide plates where the guide plates define the hitch accommodating area should be such that when the socket or eye hitch is substantially vertically aligned with the ball or pin hitch, the socket or eye hitch should be just about to engage the guide plates but slightly spaced apart therefrom.

While the guide devices according to the invention have been described with reference to their use on a four-by-four towing vehicle and a trailer, the guide device may be used in conjunction with any suitable towing vehicle, for example, a truck, a lorry, a van, a car, a bus or the like. Further, the guide devices may be used in conjunction with any type of trailer or trailable element, for example, a cattle box, a horse box, a diesel bowzer, a plant trailer, a mobile water pump, a mobile mulsher for gardens, a mobile motorway lighting system, a mobile generator, a mobile air compressor, a mobile cable carrier, for example, of the type for carrying large reels of cable, a boat trailer, a caravan, a mobile elevation hoist, mobile site cabins, mobile wood processors or any other trailer or trailable element, whether it be a trailer or mobile equipment.

## Claims

1. A guide device for guiding a first hitch element (3,5,71,76) of a pair of interengageable complementary hitch elements (3,5,71,76) mounted on one of a prime mover (2,73) and a trailable element (4,72) into substantial vertical alignment with a second hitch element (3,5,71,76) of the pair of hitch elements (3,5,71,76) mounted on the other one of the prime mover (2,73) and the trailable element (4,72), the guide device comprising a mounting means (14,88) for mounting on one of the prime mover and the trailable element between the second hitch element and the one of the prime mover and the trailable element, and a guide element (12) comprising a pair of diverging guide members (24) defining a hitch accommodating area (30), the guide element (12) being pivotally coupleable to the mounting means (14,88) about a pivot axis (15) with the second hitch element located in or vertically aligned with the hitch accommodating area (30), and the guide element being pivotal about the pivot axis (15) relative to the mounting means (14,88) and relative to the second hitch element, the guide members (24) being adapted to engage and guide the first hitch element into substantial vertical alignment with the second hitch element as the one of the prime mover and the trailable element is urged towards the other one of the prime mover and the trailable element, **characterised in that** a limit means (43) is provided for limiting the angle through which the guide element (12) is pivotal about the pivot axis (15) to a predefined pivot angle, and the limit means (43) is configured to limit pivoting of the guide element (12), so that the guide element is pivotal about the pivot axis (15) from a central position relative to a datum line (45) extending between the pivot axis (15) and a vertical axis (47) defined by the second hitch element an equal amount on respective opposite sides of the datum line (45) into respective offset positions.

2. A guide device as claimed in Claim 1 **characterised in that** the predefined pivot angle through which pivoting of the guide element (12) about the pivot axis (15) is limited by the limited means does not exceed 30°.

3. A guide device as claimed in Claim 1 or 2 **characterised in that** the predefined pivot angle through which pivoting of the guide element (12) about the pivot axis (15) is limited by the limit means does not exceed 20°.

4. A guide device as claimed in any preceding claim **characterised in that** the guide element (12) defines a centre line (48) extending from an apex (25) defined by the guide members (24) and bisecting the hitch accommodating area (30), the centre line (48) coinciding with the datum line (45) when the guide element (12) is in the central position.

5. A guide device as claimed in any preceding claim **characterised in that** the datum line (45) extends parallel to a centre line (8,11) of the one of the prime mover and the trailable element on which the mounting means (14,88) is mountable.

6. A guide device as claimed in any preceding claim **characterised in that** the datum line (45) coincides with a centre line (8,11) of the one of the prime mover and the trailable element on which the mounting means (14,88) is mountable.

7. A guide device as claimed in any preceding claim **characterised in that** the limit means (43) comprises a pair of limit elements (43) for engaging the respective guide members (24) externally of the hitch accommodating area (30).

8. A guide device as claimed in Claim 7 **characterised in that** the limit elements (43) are mounted on the mounting means (14,88).

9. A guide device as claimed in Claim 7 or 8 **characterised in that** the limit elements (43) are spaced apart from each other on respective opposite sides of the pivot axis (15) about which the guide element (12) is pivotally coupleable to the mounting means (14,88).

10. A guide device as claimed in any preceding claim **characterised in that** each guide member comprises a guide plate (24) and that the guide plates (24) diverge from each other to define the apex (25) in the form of an elongated ridge (26), and the pivot axis (15) about which the guide element (12) is pivotally coupleable to the mounting means (14,88) extends substantially parallel to the ridge (26) defined by the apex (25) formed by the guide plates (24).

11. A guide device as claimed in any preceding claim **characterised in that** a pivot pin (28) extends from the guide element (12), the pivot pin (28) defining the pivot axis (15) about which the guide element (12) is pivotal relative to the mounting means (14,88), and the pivot pin (28) is pivotally engageable in a pivot bore (29) extending into the mounting means (14,88).

12. A guide device as claimed in any preceding claim **characterised in that** the guide element (12) is releasably pivotally coupleable with the mounting means (14,88).

13. A guide device as claimed in any preceding claim **characterised in that** the hitch accommodating area (30) is adapted for accommodating the second hitch element comprising one of a ball hitch element and a pin hitch element.

14. A prime mover (2,73) comprising a guide device (1) as claimed in any preceding claim.

15. A trailable element (4,72) comprising a guide device (1) as claimed in any of Claims 1 to 13.

## Patentansprüche

1. Führungsvorrichtung zum Führen eines ersten Kupplungselements (3, 5, 71, 76) eines komplementär in Eingriff bringbaren Kupplungselementpaars (3, 5, 71, 76), das an einer Zugmaschine (2, 73) oder einem schleppbaren Element (4, 72) angebracht ist, in eine im Wesentlichen vertikale Ausrichtung mit einem zweiten Kupplungselement (3, 5, 71, 76) des Kupplungselementpaars (3, 5, 71, 76), das an dem anderen von der Zugmaschine (2, 73) und dem schleppbaren Element (4, 72) angebracht ist, wobei die Führungsvorrichtung eine Befestigungseinrichtung (14, 88) zum Befestigen an der Zugmaschine oder an dem schleppbaren Element zwischen dem zweiten Kupplungselement und dem jeweiligen der Zugmaschine oder dem schleppbaren Element und ein Führungselement (12) umfasst, das ein Paar divergierender Führungselemente (24) aufweist, welches einen Kupplungsunterbringungsbereich (30) definiert, wobei das Führungselement (12) mit der Befestigungseinrichtung (14, 88) um eine Schwenkachse (15) schwenkbar mit dem zweiten Kupplungselement verbindbar ist, das in dem oder zu dem Kupplungsunterbringungsbereich (30) vertikal ausgerichtet angeordnet ist, und wobei das Führungselement um die Schwenkachse (15) relativ zu der Befestigungseinrichtung (14, 88) und relativ zu dem zweiten Kupplungselement schwenkbar ist, wobei die Führungselemente (24) dazu geeignet sind, mit dem ersten Kupplungselement in Eingriff zu treten und es in im Wesentlichen vertikale Ausrichtung mit dem zweiten Kupplungselement zu führen, während das jeweilige der Zugmaschine oder des schleppbaren Elements in Richtung des jeweils anderen der Zugmaschine oder des schleppbaren Elements gedrängt wird, **dadurch gekennzeichnet, dass** eine Begrenzungseinrichtung (43) zum Begrenzen des Winkels vorhanden ist, um den das Führungselement (12) um die Schwenkachse (15) bis zu einem vorbestimmten Schwenkwinkel schwenkbar ist, wobei die Begrenzungseinrichtung (43) dazu eingerichtet ist, das Schwenken des Führungselements (12) zu begrenzen, so dass das Führungselement aus einer mittleren Stellung hinsichtlich einer Bezugslinie (45), die sich zwischen der Schwenkachse (15) und einer durch das zweite Kupplungselement definierten Vertikalachse (47) erstreckt, um einen gleichen Betrag auf jeweils entgegengesetzten Seiten der Bezugslinie (45) in entsprechende Endstellungen um die Schwenkachse (15) schwenkbar ist.

2. Führungsvorrichtung nach Anspruch 1,
**dadurch gekennzeichnet, dass** der vorbestimmte Schwenkwinkel, um den das
Schwenken des Führungselements (12) um die Schwenkachse (15) von der Begrenzungseinrichtung begrenzt ist, 30° nicht überschreitet.

3. Führungsvorrichtung nach Anspruch 1 oder 2,
**dadurch gekennzeichnet, dass** der vorbestimmte Schwenkwinkel, um den das Schwenken des Führungselement (12) um die Schwenkachse (15) von der Begrenzungseinrichtung begrenzt ist, 20° nicht überschreitet.

4. Führungsvorrichtung nach einem der vorhergehenden Ansprüche,
**dadurch gekennzeichnet, dass** das Führungselement (12) eine Mittellinie (48) definiert, die sich von einem Scheitel (25) aus erstreckt, der durch die Führungselemente (24) definiert ist und den Kupplungsunterbringungsbereich (30) halbiert, wobei die Mittellinie (48) mit der Bezugslinie (45) zusammenfällt, wenn das Führungselement (12) in der Mittelstellung ist.

5. Führungsvorrichtung nach einem der vorhergehenden Ansprüche,
**dadurch gekennzeichnet, dass** sich die Bezugslinie (45) parallel zu einer Mittellinie (8, 11) des jeweiligen der Zugmaschine oder des schleppbaren Elements erstreckt, an dem die Befestigungseinrichtung (14, 88) befestigbar ist.

6. Führungsvorrichtung nach einem der vorhergehenden Ansprüche,
**dadurch gekennzeichnet, dass** die Bezugslinie (45) mit einer Mittellinie (8, 11) des jeweiligen der Zugmaschine oder des schleppbaren Elements zusammenfällt, an dem die Befestigungseinrichtung (14, 88) befestigbar ist.

7. Führungsvorrichtung nach einem der vorhergehenden Ansprüche,
**dadurch gekennzeichnet, dass** die Begrenzungseinrichtung (43) ein Begrenzungselementpaar (43) zum in Eingriff kommen mit den entsprechenden Führungselementen (24) außerhalb des Kupplungsunterbringungsbereichs (30) umfasst.

8. Führungsvorrichtung nach Anspruch 7,
**dadurch gekennzeichnet, dass** die Begrenzungselemente (43) an der Befestigungseinrichtung (14, 88) angebracht sind.

9. Führungsvorrichtung nach Anspruch 7 oder 8,
**dadurch gekennzeichnet, dass** die Begrenzungseinrichtung (43) auf jeweils entgegengesetzten Seiten der Schwenkachse (15) voneinander beabstandet sind, um die das Führungselement (12) schwenkbar mit der Befestigungseinrichtung (14, 88) verbindbar ist.

10. Führungsvorrichtung nach einem der vorhergehenden Ansprüche,
**dadurch gekennzeichnet, dass** jedes Führungselement eine Führungsplatte (24) aufweist, und dass die Führungsplatten (24) voneinander divergieren, um den Scheitel (25) in der Form einer länglichen Rippe (26) zu definieren, und dass die Schwenkachse (15), um welche das Führungselement (12) schwenkbar mit der Befestigungseinrichtung (14, 88) verbindbar ist, sich im Wesentlichen parallel zu der Rippe (26) erstreckt, die durch den von den Befestigungsplatten (24) gebildeten Scheitel (25) definiert ist.

11. Führungsvorrichtung nach einem der vorhergehenden Ansprüche,
**dadurch gekennzeichnet, dass** ein Schwenkstift (28) sich von dem Führungselement (12) erstreckt, wobei der Schwenkstift (28) die Schwenkachse (15) definiert, um die das Führungselement (12) relativ zu der Befestigungseinrichtung (14, 88) schwenkbar ist, und wobei der Schwenkstift (28) schwenkbar mit einer Schwenkpunktsbohrung (29) in Eingriff bringbar ist, die sich in die Befestigungseinrichtung (14, 88) hinein erstreckt.

12. Führungsvorrichtung nach einem der vorhergehenden Ansprüche,
**dadurch gekennzeichnet, dass** das Führungselement (12) lösbar schwenkbar mit der Befestigungseinrichtung (14, 88) verbindbar ist.

13. Führungsvorrichtung nach einem der vorhergehenden Ansprüche,
**dadurch gekennzeichnet, dass** der Kupplungsunterbringungsbereich (30) das zweite Kupplungselement unterzubringen vermag, welches ein Kugelkupplungselement oder ein Bolzenkupplungselement umfasst.

14. Zugmaschine (2, 73) mit einer Führungsvorrichtung (1) nach einem der vorhergehenden Ansprüche.

15. Schleppbares Element (4, 72) mit einer Führungsvorrichtung (1) nach einem der Ansprüche 1 bis 13.

## Revendications

1. Dispositif de guidage pour guider un premier élément d'attelage (3, 5, 71, 76) d'une paire d'éléments d'attelage (3, 5, 71, 76) complémentaires pouvant se mettre en prise mutuellement montés sur l'un parmi une puissance motrice (2, 73) et un élément tractable (4, 72) en alignement sensiblement vertical avec un second élément d'attelage (3, 5, 71, 76) de la paire d'éléments d'attelage (3, 5, 71, 76) monté sur l'autre parmi la puissance motrice (2, 73) et l'élément tractable (4, 72), le dispositif de guidage comprenant un moyen de support (14, 88) destiné à être monté sur l'un parmi la puissance motrice et l'élément tractable entre le second élément d'attelage et l'un parmi la puissance et l'élément tractable, et un élément de guidage (12) comprenant une paire d'éléments de guidage divergents (24) définissant une zone de logement d'attelage (30), l'élément de guidage (12) pouvant être couplé de manière pivotante au moyen de support (14, 88) autour d'un axe de pivot (15) avec le second élément d'attelage positionné dans ou verticalement aligné avec la zone de logement d'attelage (30) et l'élément de guidage pouvant pivoter autour de l'axe de pivot (15) par rapport au moyen de support (14, 88) et par rapport au second élément d'attelage, les éléments de guidage (24) étant adaptés pour mettre en prise et guider le premier élément d'attelage en alignement sensiblement vertical avec le second élément d'attelage lorsque l'un parmi la puissance motrice et l'élément tractable est poussé vers l'autre parmi la puissance motrice et l'élément tractable, **caractérisé en ce qu'**un moyen de limite (43) est prévu pour limiter l'angle sur lequel l'élément de guidage (12) peut pivoter autour de l'axe de pivot (15) à un angle de pivot prédéfini, et le moyen de limite (43) est configuré pour limiter le pivotement de l'élément de guidage (12), de sorte que l'élément de guidage peut pivoter autour de l'axe de pivot (15) à partir d'une position centrale par rapport à une ligne de données (45) s'étendant entre l'axe de pivot (15) et un axe vertical (47) défini par le second élément d'attelage, à une quantité égale sur les côtés opposés respectifs de la ligne de donnée (45) dans des positions décalées respectives.

2. Dispositif de guidage selon la revendication 1, **caractérisé en ce que** l'angle de pivot prédéfini sur lequel le pivotement de l'élément de guidage (12) autour de l'axe de pivot (15) est limité par le moyen de limite ne dépasse pas 30°.

3. Dispositif de guidage selon la revendication 1 ou 2, **caractérisé en ce que** l'angle de pivot prédéfini sur lequel le pivotement de l'élément de guidage (12) autour de l'axe de pivot (15) est limité par le moyen de limite, ne dépasse pas 20°.

4. Dispositif de guidage selon l'une quelconque des revendications précédentes, **caractérisé en ce que** l'élément de guidage (12) définit une ligne centrale (48) s'étendant à partir d'un sommet (25) défini par les éléments de guidage (24) et coupant la zone de logement d'attelage (30), la ligne centrale (48) coïncidant avec la ligne de données (45) lorsque l'élément de guidage (12) est dans la position centrale.

5. Dispositif de guidage selon l'une quelconque des revendications précédentes, **caractérisé en ce que** la ligne de données (45) s'étendant parallèlement à une ligne centrale (8, 11) de l'un parmi la puissance motrice et l'élément tractable sur lequel le moyen de support (14, 88) peut être monté.

6. Dispositif de guidage selon l'une quelconque des revendications précédentes, **caractérisé en ce que** la ligne de données (45) coïncide avec une ligne centrale (8, 11) de l'un parmi la puissance motrice et l'élément tractable sur lequel le moyen de montage (14, 88) peut être monté.

7. Dispositif de guidage selon l'une quelconque des revendications précédentes, **caractérisé en ce que** le moyen de limite (43) comprend une paire d'éléments de limite (43) pour mettre en prise les éléments de guidage (24) respectifs à l'extérieur de la zone de logement d'attelage (30).

8. Dispositif de guidage selon la revendication 7, **caractérisé en ce que** les éléments de limite (43) sont montés sur le moyen de support (14, 88).

9. Dispositif de guidage selon la revendication 7 ou 8, **caractérisé en ce que** les éléments de limite (43) sont espacés les uns des autres sur des côtés opposés respectifs de l'axe de pivot (15) autour duquel l'élément de guidage (12) peut être couplé de manière pivotante au moyen de support (14, 88).

10. Dispositif de guidage selon l'une quelconque des revendications précédentes, **caractérisé en ce que** chaque élément de guidage comprend une plaque de guidage (24) et **en ce que** les plaques de guidage (24) divergent l'une de l'autre afin de définir le sommet (25) sous la forme d'une crête allongée (26), et l'axe de pivot (15) autour duquel l'élément de guidage (12) peut être couplé de manière pivotante au moyen de support (14, 88), s'étendant de manière sensiblement parallèle à la crête (26) définie par le sommet (25) formé par les plaques de guidage (24).

11. Dispositif de guidage selon l'une quelconque des revendications précédentes, **caractérisé en ce qu'**une broche de pivot (28) s'étend à partir de l'élément de guidage (12), la broche de pivot (28) définissant l'axe de pivot (15) autour duquel l'élément de guidage (12) peut pivoter par rapport au moyen de support (14, 88) et la broche de pivot (28) peut se mettre en prise de manière pivotante dans un alésage de pivot (29) s'étendant dans le moyen de support (14, 88).

12. Dispositif de guidage selon l'une quelconque des revendications précédentes, **caractérisé en ce que** l'élément de guidage (12) peut être couplé de manière pivotante et amovible avec le moyen de support (14, 88).

13. Dispositif de guidage selon l'une quelconque des revendications précédentes, **caractérisé en ce que** la zone de logement d'attelage (30) est adaptée pour loger le second élément d'attelage comprenant l'un parmi un élément d'attelage à boule et un élément d'attelage à broche.

14. Puissance motrice (2, 73) comprenant un dispositif de guidage (1) selon l'une quelconque des revendications précédentes.

15. Elément tractable (4, 72) comprenant un dispositif de guidage (1) selon l'une quelconque des revendications 1 à 13.
